# FASCICULE DE BREVET EUROPEEN

(11) **EP 2 135 535 B1**
(45) Date de publication et mention de la délivrance du brevet: **31.07.2013**
(21) Numéro de dépôt: 09356041.5
(22) Date de dépôt: 12.06.2009
(51) Int. Cl.: A47J 43/08, A47J 43/046, A47J 31/00, A47J 36/26

(54) **Appareil pour la préparation de mousse à partir d'un liquide**
Gerät zur Zubereitung von Schaum aus einer Flüssigkeit
Appliance for preparing a foam from a liquid

(30) Priorité: 20.06.2008 FR 0803454
(43) Date de publication de la demande: 23.12.2009
(73) Titulaire: Seb S.A., 69130 Ecully (FR)
(72) Inventeur: Dupuy, Christian, 53440 La Bazoge Montpincon (FR); Evrard, Yoann, 53950 Louverne (FR); Desmeulles, Christophe, 50000 Saint-Lô (FR); Deliens, Patrick, 53100 Mayenne (FR)
(74) Mandataire: Kiehl, Hubert

(56) Documents cités:
- EP-A- 1 656 866
- FR-A- 1 141 072

## Description

La présente invention concerne un appareil pour la préparation de mousse à partir d'un liquide à base de lait destinée à la réalisation de boissons.

Les appareils du type précité comportent généralement un récipient, éventuellement chauffé, pour recevoir un liquide à base de lait dans le fond duquel est agencé un outil de moussage entraîné par un moteur électrique. L'outil de moussage est guidé en rotation à l'aide d'un palier agencé dans le fond du récipient.

Ces appareils présentent l'inconvénient de s'encrasser au niveau du palier si le nettoyage entre chaque préparation n'est pas réalisé parfaitement, ce qui a pour effet de bloquer le moteur et l'outil de moussage au démarrage de la préparation.

On connaît du document EP1656866 un appareil comportant un dispositif d'entraînement magnétique de l'outil de moussage. Des éléments magnétiques entraînés par le moteur coopèrent avec des éléments magnétiques agencés dans l'outil de moussage, le fond de la cuve présentant un bossage pour guider l'outil en rotation. Cet agencement permet de rendre l'outil de moussage amovible lors du nettoyage.

Cependant, comme l'outil de moussage a des dimensions réduites, les aimants sont de petites tailles et génèrent un couple d'entraînement faible. Si le nettoyage du bossage recevant l'outil de brassage n'est pas parfait, l'outil peut être également être bloqué au démarrage de la préparation suivante. De plus, l'entraînement de l'outil de moussage n'étant pas direct, l'outil peut ralentir ou se bloquer au cours d'une préparation.

Le but de la présente invention est de remédier aux inconvénients précités et de proposer un appareil qui garantisse la rotation de l'outil de moussage lors d'une préparation, en particulier au démarrage de celle-ci.

Un autre but de l'invention est de proposer un appareil qui garantisse la rotation de l'outil de moussage qui soit simple et très économique à mettre en oeuvre.

Ces buts sont atteints avec un appareil pour la préparation de mousse à partir d'un liquide, tel qu'un liquide à base de lait comprenant un récipient pour recevoir le liquide dans lequel est agencé un outil de moussage, des moyens d'entraînement en rotation de l'outil de moussage comportant un moteur électrique alimenté par un circuit d'alimentation électrique, **caractérisé en ce que** le circuit d'alimentation électrique génère une série d'impulsions au démarrage du moteur et en ce que l'appareil comporte un dispositif autorisant un mouvement axial du moteur à l'encontre de moyens de rappel sous l'effet de la série d'impulsions en cas de blocage de l'outil de moussage.

Par mouvement axial du moteur, on comprend un mouvement de rotation relatif entre le rotor et le stator du moteur.

Selon l'invention, en cas de blocage de l'outil au démarrage d'une préparation, la série d'impulsions associée au dispositif autorisant un mouvement axial du moteur à l'encontre de moyens de rappel génère une série de chocs au niveau de la zone de blocage, ce qui permet de libérer l'outil.

Avantageusement, une impulsion comporte une première période correspondant à une alimentation du moteur puis une deuxième période correspondant à une coupure de l'alimentation du moteur.

Une impulsion permet de générer un démarrage puis un arrêt du moteur.

De préférence, les moyens de rappel permettent un mouvement axial du moteur pendant un temps T1 au démarrage du moteur lorsque l'outil de moussage est bloqué et la première période est au moins égale à ce temps T1.

Cette disposition permet de garantir que le moteur, pendant qu'il était alimenté par la première période de l'impulsion, a eu suffisamment de temps pour accumuler l'énergie maximum possible dans les moyens de rappel.

Avantageusement, après la première période, les moyens de rappel ramènent le moteur légèrement au-delà de sa position initiale dans un temps T2 et la deuxième période est égale à ce temps T2.

Cette disposition permet aux moyens de rappel de ramener le moteur dans une position la plus extrême possible, juste avant l'impulsion suivante. Ainsi la rotation axiale du moteur est amplifiée impulsion après impulsion.

Avantageusement, la série d'impulsions comporte de une à dix impulsions, de préférence quatre.

La demanderesse a mis en évidence que quatre impulsions permettaient de garantir un bon démarrage dans la plupart des conditions d'un outil de moussage bloqué.

De préférence, le dispositif autorisant un mouvement axial du moteur et les moyens de rappel du moteur sont constitués par une pièce élastique en matériau élastomère.

Lorsque l'outil est bloqué, cette disposition permet d'obtenir lors de la première période d'une impulsion où le circuit d'alimentation du moteur fournit un courant, une rotation axiale du moteur par rapport à l'outil. Cette rotation axiale permet au moteur de générer un couple dynamique sur le point de blocage beaucoup plus important que le couple statique d'un moteur immobilisé, ce qui permet de créer un choc au niveau du point de blocage. Lors de la deuxième période de l'impulsion où le circuit d'alimentation du moteur ne fournit pas de courant, les moyens de rappel élastique ramènent le moteur en position.

Avantageusement, le récipient repose sur un socle et la pièce élastique, comporte des moyens de maintien axiaux souples du moteur dans le socle.

Cette disposition permet de réaliser un maintien élastique du moteur avec une seule pièce, de manière simple et économique.

De préférence, la dureté de la matière constituant la pièce élastique est comprise entre 50 et 80 shores, de préférence 65 shores.

L'invention sera mieux comprise à l'étude du mode de réalisation pris à titre nullement limitatif et illustré dans les figures annexées dans lesquelles :
- La figure 1 illustre une vue en perspective de l'appareil selon un mode particulier de réalisation de l'invention.
- La figure 2 illustre une vue en coupe de l'appareil selon la ligne II-II de la figure 1.
- La figure 3 illustre une vue en éclaté partiel des moyens d'entraînement de l'outil de moussage de l'appareil de la figure 1.
- La figure 4 illustre une vue en section partielle de l'appareil selon la ligne IV-IV de la figure 2, le moteur à l'arrêt.
- La figure 5 illustre une vue en section partielle de l'appareil selon la ligne IV-IV de la figure 2, le moteur alimenté par la première partie d'une impulsion.
- La figure 6 illustre une vue schématique du circuit d'alimentation du moteur de l'appareil de la figure 1.
- La figure 7 illustre le courant d'alimentation I de l'appareil de la figure 1 et le courant d'alimentation Im au démarrage du moteur dudit appareil.

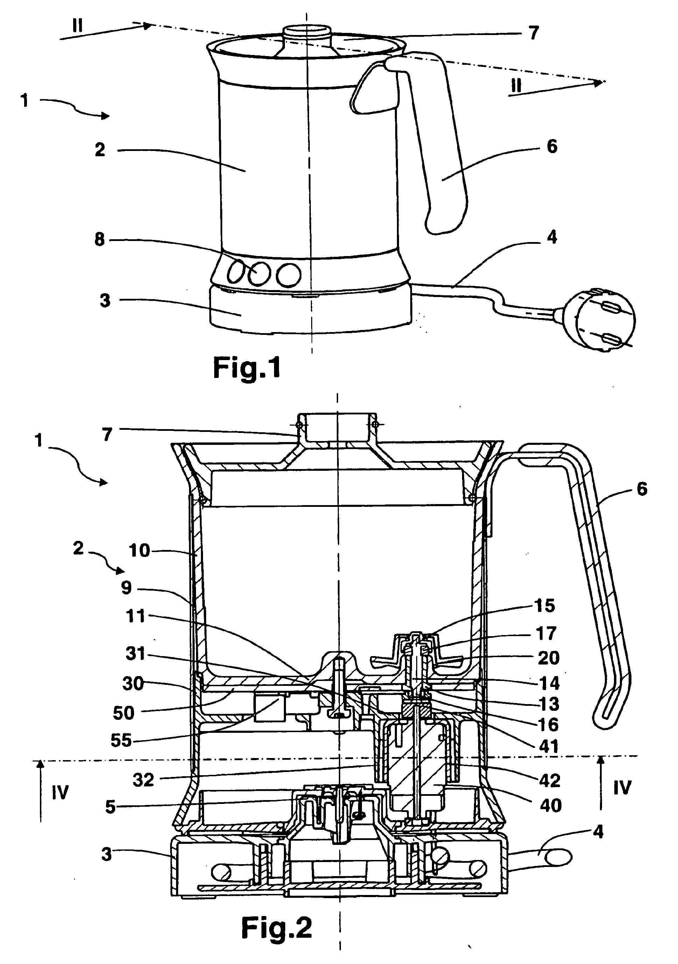

Tel que visible aux figures 1 et 2, l'appareil 1 pour la préparation de mousse suivant l'invention comporte un pot 2 destiné à recevoir le liquide et une base 3 équipée d'un cordon 4 d'alimentation raccordable au réseau électrique. Le pot 2 peut être séparé de la base 3 à l'aide d'un dispositif 5 de connexion électrique male/femelle connu en soi. Le pot 2 comporte une poignée 6 de manutention ainsi qu'un couvercle 7. L'appareil 1 comporte à la base du pot 2 un tableau de commande 8 permettant à l'utilisateur de choisir la préparation souhaitée.

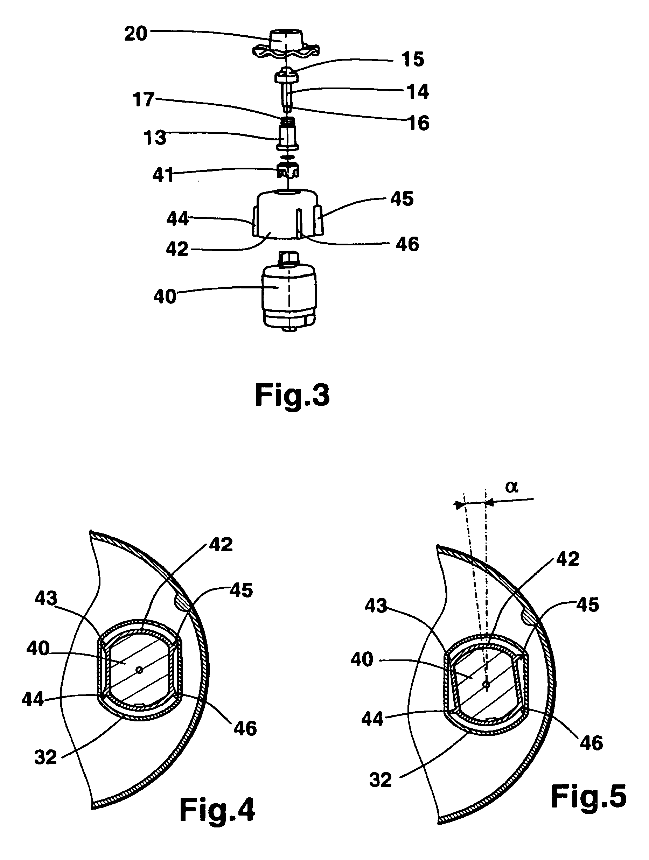

Le pot 2 de forme cylindrique comporte un récipient 10 agencé sur un socle 30, le tout entouré par une enveloppe 9. Le récipient 10 comprend un fond 11 dans lequel est agencé un palier constitué par un coussinet 13 et un axe 14. Cet axe 14 (fig.2 et 3) comporte une première extrémité 15 située à l'intérieur du récipient 10 sur laquelle est clipé un outil de moussage 20 ayant la forme d'un disque ondulé. La première extrémité 15 de l'axe 14 comporte un joint 17 assurant l'étanchéité du récipient.

Le socle 30 comporte une paroi 31 parallèle au fond 11 du récipient 10 sous laquelle est agencé un moteur 40. L'axe 14 qui supporte l'outil de moussage 20 comporte une deuxième extrémité 16 qui est entraînée par le moteur 40 à l'aide d'un dispositif d'accouplement 41.

Le moteur 40 est entouré de façon serrante par une pièce élastique 42 comportant quatre excroissances 43,44,45,46 axiales (fig.3 à 5) réparties de manière approximativement uniforme sur sa périphérie. La paroi 31 comprend un logement 32 s'étendant axialement à l'opposé du récipient 10 qui reçoit le moteur 40. Les quatre excroissances 43,44,45,46 prennent appui dans le logement 32 pour maintenir le moteur en position.

Sous le fond 11 est fixée une coupelle 50 en inox supportant un élément chauffant plat réalisé par sérigraphie et comportant également un circuit de commande 55 du moteur et de l'élément chauffant.

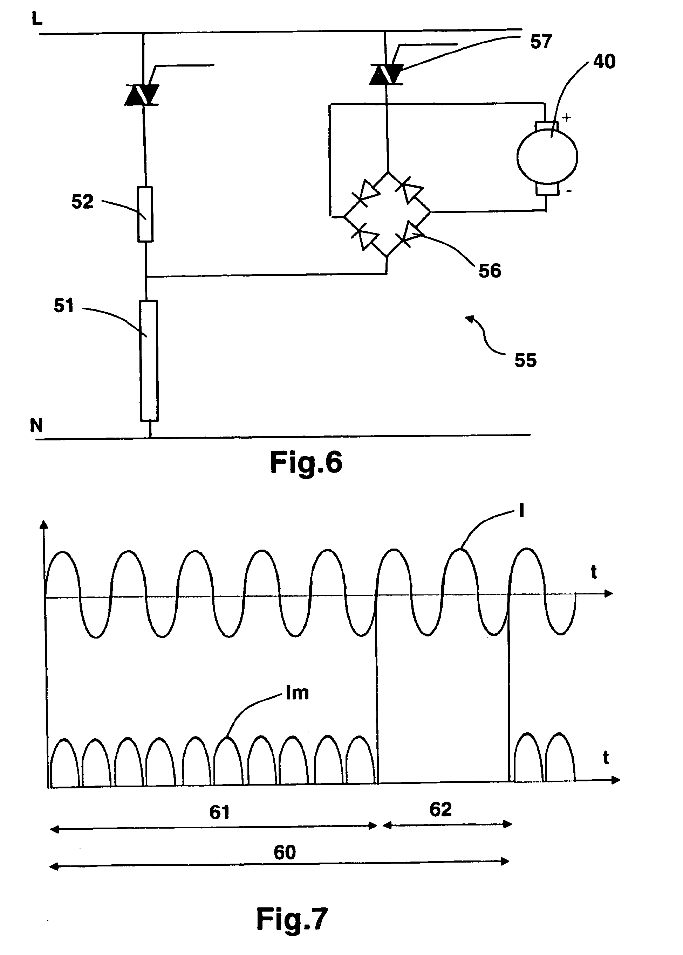

Le moteur 40 est du type à courant continu, d'une puissance d'environ 10 Watts. Tel que visible à la figure 6, l'élément chauffant est constitué par une première résistance chauffante 51 et par une deuxième résistance chauffante 52, le circuit 55 d'alimentation électrique prélevant aux bornes de la première résistance chauffante 51 un courant de tension 24 volts qui est ensuite redressé par un pont de diodes 56 pour enfin alimenter le moteur 40. Le circuit 55 d'alimentation électrique comporte un triac 57 pour piloter l'alimentation du moteur 40. Au démarrage du moteur 40, le circuit de commande 55 génère quatre impulsions à l'aide du triac 57.

La figure 7 illustre le courant Im fourni au moteur par le circuit 55 d'alimentation électrique à partir du courant I du réseau électrique lors d'une première impulsion 60 au démarrage du moteur 40. L'impulsion 60 comporte deux périodes, une première période 61 correspondant à une alimentation du moteur 40 pendant cinq alternances du courant du réseau électrique puis une deuxième période 62 correspondant à une coupure de l'alimentation du moteur 40 pendant deux alternances du courant du réseau électrique.

Le circuit 55 d'alimentation électrique comporte également une surveillance de la force contre électromotrice du moteur permettant de détecter le blocage du moteur 40.

En fonctionnement, l'utilisateur retire le couvercle 7 de l'appareil 1 et verse par exemple du lait froid dans le récipient 10. Il repose ensuite le couvercle 7 sur le récipient 10 et commande le démarrage de la préparation de la mousse à l'aide du tableau de commande 8. Le circuit 55 d'alimentation électrique active l'élément chauffant et génère une série de quatre impulsions électriques sur le moteur 40. A ce moment, le moteur 40 peut être bloqué par des résidus de lait qui n'ont pas été éliminés lors du nettoyage d'une précédente préparation et qui se sont solidifiés par exemple au niveau du joint d'étanchéité 17. Lors de la première période 61 de la première impulsion 60, le moteur 40 va tourner autour de son axe d'un angle α (fig .5), comprimant les quatre excroissances 43,44,45,46 de la pièce élastique 42. Lors de la deuxième période 62, les quatre excroissances 43,44,45,46 ramènent le moteur légèrement au-delà de sa position au repos. Lors de la période 61 de l'impulsion suivante, la course en rotation du moteur va être légèrement amplifiée, augmentant l'effet de choc sur le point de blocage. Cette série d'impulsions se traduit donc au niveau du point de blocage par une série de chocs amplifiée par le montage élastique axial du moteur. Sous l'effet de ces chocs, le point de blocage cède et le moteur 40 entraîne l'outil de moussage 20.

Lorsque la préparation est terminée, le circuit de commande 55 arrête la chauffe et la rotation du moteur 40. L'utilisateur peut alors prendre le pot 2 par la poignée 6 et verser la mousse dans sa boisson. Ensuite, il peut nettoyer le récipient 10, en particulier au niveau du palier, en déclipant l'outil de moussage 20.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention tel que défini par les revendications.

Ainsi, dans une variante de réalisation, le dispositif autorisant un mouvement axial du moteur et les moyens de rappel dudit moteur pourront être constitués par une pièce élastique faisant office de dispositif d'accouplement entre le moteur et l'axe supportant l'outil de moussage. Cette pièce élastique travaille en torsion sous l'effet des impulsions dans le cas d'un démarrage du moteur, outil de moussage bloqué.

## Revendications

1. Appareil (1) pour la préparation de mousse à partir d'un liquide, tel qu'un liquide à base de lait, comprenant un récipient (10) pour recevoir le liquide dans lequel est agencé un outil de moussage (20), des moyens d'entraînement en rotation de l'outil de moussage comportant un moteur (40) électrique alimenté par un circuit (55) d'alimentation électrique, **caractérisé en ce que** ledit circuit (55) d'alimentation électrique génère une série d'impulsions au démarrage du moteur (40) et **en ce que** ledit appareil comporte un dispositif autorisant un mouvement axial du moteur (40) à l'encontre de moyens de rappel sous l'effet de la série d'impulsions en cas de blocage de l'outil de moussage (20).

2. Appareil selon la revendication 1, **caractérisé en ce qu'**une impulsion (60) comporte une première période (61) correspondant à une alimentation du moteur (40) puis une deuxième période (62) correspondant à une coupure de l'alimentation du moteur (40).

3. Appareil selon l'une quelconque des revendications 1 à 2, **caractérisé en ce que** les moyens de rappel permettent un mouvement axial du moteur (40) pendant un temps T1 au démarrage du moteur lorsque l'outil de moussage (20) est bloqué et la première période (61) est au moins égale à ce temps T1.

4. Appareil selon l'une quelconque des revendications 1 à 3, **caractérisé en ce que** après la première période (61), les moyens de rappel ramènent le moteur légèrement au-delà de sa position initiale dans un temps T2 et **en ce que** la deuxième période (62) est égale à ce temps T2.

5. Appareil selon l'une quelconque des revendications 1 à 4, **caractérisé en ce que** la série d'impulsions comporte de une à dix impulsions, de préférence quatre.

6. Appareil selon l'une quelconque des revendications 1 à 5, **caractérisé en ce que** le dispositif autorisant un mouvement axial du moteur et les moyens de rappel dudit moteur sont constitués par une pièce élastique (42) en matériau élastomère.

7. Appareil selon la revendication 6, **caractérisé en ce que** le récipient (10) repose sur un socle (30) et **en ce que** la pièce élastique (42) comporte des moyens de maintien axiaux souples (43,44,45,46) du moteur (40) dans le socle (30).

8. Appareil selon l'une quelconque des revendications 6 ou 7, **caractérisé en ce que** la dureté de la matière constituant la pièce élastique (42) est comprise entre 50 et 80 shores, de préférence 65 shores.

## Patentansprüche

1. Gerät (1) für die Zubereitung von Schaum ausgehend von einer Flüssigkeit, wie etwa einer Flüssigkeit auf Milchbasis, umfassend ein Gefäß (10) zum Aufnehmen der Flüssigkeit, in dem ein Aufschäumungswerkzeug (20) angeordnet ist, wobei Drehantriebsmittel für das Aufschäumungswerkzeug einen Elektromotor (40) umfassen, der von einem Stromversorgungsschaltkreis (55) mit Strom versorgt wird, **dadurch gekennzeichnet, dass** der Stromversorgungsschaltkreis (55) eine Reihe von Impulsen beim Start des Motors (40) erzeugt und dadurch, dass das Gerät eine Vorrichtung umfasst, die eine Axialbewegung des Motors (40) gegen Rückstellmittel unter der Wirkung der Reihe von Impulsen bei einer Blockade des Aufschäumungswerkzeuges (20) ermöglicht.

2. Gerät nach Anspruch 1, **dadurch gekennzeichnet, dass** ein Impuls (60) eine erste Periode (61) umfasst, die einer Stromversorgung des Motors (40) entspricht, und eine zweite Periode (62), die einer Unterbrechung der Stromversorgung des Motors (40) entspricht.

3. Gerät nach einem der Ansprüche 1 bis 2, **dadurch gekennzeichnet, dass** die Rückstellmittel eine Axialbewegung des Motors (40) während einer Zeit T1 beim Start des Motors ermöglichen, wenn das Aufschäumungswerkzeug (20) blockiert ist und die erste Periode (61) wenigstens gleich der Zeit T1 ist.

4. Gerät nach einem der Ansprüche 1 bis 3, **dadurch gekennzeichnet, dass** nach der ersten Periode (61) die Rückstellmittel den Motor in einer Zeit T2 leicht über seine ursprüngliche Position hinaus zurückbringen und dadurch, dass die zweite Periode (62) gleich der Zeit T2 ist.

5. Gerät nach einem der Ansprüche 1 bis 4, **dadurch gekennzeichnet, dass** die Reihe von Impulsen einen bis zehn Impulse, vorzugsweise vier, umfasst.

6. Gerät nach einem der Ansprüche 1 bis 5, **dadurch gekennzeichnet, dass** die Vorrichtung, die eine Axialbewegung des Motors ermöglicht, und die Rückstellmittel des Motors von einem elastischen Teil (42) aus Elastomermaterial gebildet werden.

7. Gerät nach Anspruch 6, **dadurch gekennzeichnet, dass** das Gefäß (10) auf einem Sockel (30) sitzt und dadurch, dass das elastische Teil (42) biegsame, axiale Mittel zum Halten (43, 44, 45, 46) des Motors (40) im Sockel (30) umfasst.

8. Gerät nach einem der Ansprüche 6 oder 7, **dadurch gekennzeichnet, dass** die Härte des Materials, aus dem das elastische Teil (42) besteht, zwischen 50 und 80 Shore, vorzugsweise 65 Shore, beträgt.

## Claims

1. An appliance (1) for preparing froth from a liquid, such as a milk-based liquid, comprising a recipient (10) for receiving the liquid and in which a frothing tool (20) is arranged, means for driving the frothing tool in rotation and having an electric motor (40) powered by an electric power supply circuit (55), **characterised in that** said electric power supply circuit (55) generates a series of pulses when the motor (40) is started and **in that** said appliance comprises a device allowing an axial movement of the motor (40) against return means under the effect of the series of pulses in case the frothing tool (20) is blocked.

2. An appliance according to claim 1, **characterised in that** a pulse (60) contains a first period (61) wherein power is supplied to the motor (40) and then a second period (62) wherein power supply to the motor (40) is cut off.

3. An appliance according to any one of claims 1 to 2, **characterised in that** the return means allows an axial movement of the motor (40) for a time T1 upon start-up of the motor when the frothing tool (20) is blocked and **in that** the first period (61) is at least equal to this time T1.

4. An appliance according to any one of claims 1 to 3, **characterised in that**, after the first period (61), the return means brings back the motor slightly beyond the initial position thereof in a time T2 and **in that** the second period (62) is equal to this time T2.

5. An appliance according to any one of claims 1 to 4, **characterised in that** the series of pulses contains one to ten pulses, preferably four.

6. An appliance according to any one of claims 1 to 5, **characterised in that** the device allowing an axial movement of the motor and the return means of said motor are constituted by an elastic part (42) made of elastomer material.

7. An appliance according to claim 6, **characterised in that** the recipient (10) rests on a base (30) and **in that** the elastic part (42) contains flexible axial means (43, 44, 45, 46) for maintaining the motor (40) in the base (30).

8. An appliance according to any one of claims 6 or 7, **characterised in that** the hardness of the material constituting the elastic part (42) is between 50 and 80 Shore, preferably 65 Shore.
